# FASCICULE DE BREVET EUROPEEN

(11) **EP 1 646 780 B1**
(45) Date de publication et mention de la délivrance du brevet: **02.07.2008**
(21) Numéro de dépôt: 04767445.2
(22) Date de dépôt: 24.06.2004
(51) Int. Cl.: F02M 25/07, F02B 29/04

(54) **MODULE DE REFROIDISSEMENT DE L`AIR DE SURALIMENTATION ET DES GAZ D`ECHAPPEMENT RECIRCULES D`UN MOTEUR A COMBUSTION INTERNE DE VEHICULE AUTOMOBILE**
MODUL ZUM KÜHLEN VON LADELUFT UND RÜCKGEFÜHRTEN ABGASEN VOM VERBRENNUNGSMOTOR EINES KRAFTFAHRZEUGS
MODULE FOR COOLING THE CHARGE AIR AND RECIRCULATED EXHAUST GASES FROM THE INTERNAL COMBUSTION ENGINE OF A MOTOR VEHICLE

(30) Priorité: 25.06.2003 FR 0307674; 28.11.2003 FR 0314044
(43) Date de publication de la demande: 19.04.2006
(73) Titulaire: VALEO SYSTEMES THERMIQUES, 78320 Le Mesnil Saint-Denis (FR)
(72) Inventeur: MARTINS, Carlos, F-78150 Le Chesnay (FR); CHANFREAU, Matthieu, F-78650 Saulx Marchais (FR); POTIER, Michel, F-78120 Rambouillet (FR)
(74) Mandataire: Rolland, Jean-Christophe
(86) Numéro de dépôt international: PCT/FR2004/001595
(87) Numéro de publication internationale: WO 2005/001272

(56) Documents cités:
- DE-A- 19 853 455
- DE-A- 19 902 504
- FR-A- 2 843 449
- US-A- 6 142 221

## Description

L'invention se rapporte aux véhicules automobiles à moteur à combustion interne.

Elle concerne plus particulièrement un module de refroidissement, constitué d'un refroidisseur d'air de suralimentation et d'un refroidisseur de gaz d'échappement recirculés, le refroidisseur d'air de suralimentation comprenant un faisceau d'échange de chaleur pour le refroidissement de l'air de suralimentation, une boîte collectrice d'entrée de l'air à refroidir accolée à une extrémité d'entrée du faisceau d'échange de chaleur du refroidisseur d'air de suralimentation et une boîte collectrice de sortie de l'air refroidi accolée à une extrémité de sortie du faisceau d'échange de chaleur du refroidisseur d'air de suralimentation, le refroidisseur des gaz d'échappement recirculés comprenant un faisceau d'échange de chaleur pour le refroidissement des gaz d'échappement recirculés, une boîte collectrice d'entrée des gaz d'échappement recirculés accolée à une extrémité d'entrée du faisceau d'échange de chaleur du refroidisseur des gaz d'échappement recirculés et une boîte collectrice de sortie des gaz d'échappement recirculés accolée à une extrémité de sortie du faisceau d'échange de chaleur du refroidisseur des gaz d'échappement recirculés, une enveloppe logeant le faisceau d'échange de chaleur du refroidisseur d'air de suralimentation et celui du refroidisseur des gaz d'échappement recirculés.

Afin d'augmenter la puissance spécifique des moteurs thermiques de véhicules automobiles, il est connu de les alimenter en air d'alimentation comprimé à l'aide d'un compresseur entraîné par les gaz d'échappement. Toutefois, cette compression a pour effet de porter l'air d'alimentation à une température élevée. Pour cette raison, l'air d'alimentation doit être refroidi préalablement à son introduction dans les chambres de combustion du moteur. Ce refroidissement s'effectue de manière classique dans un refroidisseur d'air, appelé refroidisseur d'air de suralimentation.

Par ailleurs, afin de répondre à des normes de pollution de plus en plus strictes, il est connu de recirculer une partie des gaz d'échappement et de les mélanger aux gaz d'admission frais afin d'abaisser la température de combustion dans le moteur. Toutefois, ces gaz d'échappement recirculés sont à une température élevée pouvant atteindre 500°C environ, de telle sorte qu'ils doivent être également refroidis. De manière classique, ce refroidissement se fait par un passage au travers d'un refroidisseur des gaz d'échappement recirculés.

Afin de réduire l'encombrement de ces deux refroidisseurs, il est connu de les loger dans un boîtier unique (DE 19 853 455). Ce document décrit un module constitué d'un refroidisseur d'air de suralimentation logé dans un boîtier et d'un refroidisseur des gaz d'échappement recirculés monté sur le refroidisseur d'air de suralimentation. La principale caractéristique de ce module est la présence d'un dispositif en forme d'entonnoir disposé à l'interface des sorties de l'air d'alimentation et des gaz recirculés. La sortie des gaz d'échappement recirculés est en aval de la sortie de l'air d'alimentation.

Toutefois; l'assemblage d'un module de refroidissement de ce type s'effectue par des moyens mécaniques classiques, tels que des vis ou des boulons. Il nécessite par conséquent un nombre important d'opérations qui prennent du temps et augmentent le coût de fabrication du module.

On connaît également du document US 6 142 221 un échangeur tri-fluides constitué par un empilement de plaques.

Par ailleurs, pour répondre à des normes de pollution de plus en plus contraignantes, on ressent le besoin de réguler de manière plus précise la température du mélange d'air d'admission et des gaz recirculés admis dans le moteur.

L'invention a précisément pour objet un module de refroidissement, selon la revendication 1, qui répond à ces objectifs.

Tout ou partie du module, en particulier les faisceaux de chacun des refroidisseurs, peuvent ainsi être dans un matériau unique, par exemple, de l'aluminium et/ou un alliage d'aluminium.

Avantageusement, l'enveloppe logeant les faisceaux d'échange de chaleur du refroidisseur d'air de suralimentation et du refroidisseur des gaz d'échappement recirculés est assemblée à ces faisceaux durant l'opération de brasage unique durant laquelle ces faisceaux sont assemblés l'un à l'autre. En particulier, l'enveloppe est dans le même matériau unique, par exemple, de l'aluminium et/ou un alliage d'aluminium que les faisceaux des refroidisseurs.

Grâce à cette caractéristique, l'assemblage du module de refroidissement s'effectue en une seule opération sans nécessiter le recours à des moyens d'assemblage mécaniques tels que des vis ou des boulons. Sa fabrication est donc plus rapide et son coût de revient abaissé.

Selon un premier mode de réalisation, l'enveloppe comporte un premier et un second rebords périphériques qui débordent de part et d'autre du faisceau du refroidisseur d'air de suralimentation, la boîte collectrice d'entrée du refroidisseur d'air de suralimentation étant assemblée à l'un de ces rebords périphériques, la boîte collectrice de sortie du refroidisseur d'air de suralimentation étant assemblée à l'autre de ces rebords périphériques.

Dans ce mode de réalisation, les boîtes collectrices d'entrée et de sortie du refroidisseur d'air de suralimentation sont rapportées postérieurement à l'opération de brasage. Elles peuvent par conséquent être réalisées par moulage en un matériau différent, par exemple en matière plastique.

Selon un autre mode de réalisation, les dimensions de l'enveloppe sont choisies de manière qu'elles délimitent un premier et un second espaces libres respectivement à l'extrémité d'entrée et à l'extrémité de sortie du faisceau d'échange de chaleur du refroidisseur d'air de suralimentation, le premier et le second espaces libres constituant respectivement une boîte collectrice d'entrée et une boîte collectrice de sortie de l'air de suralimentation.

Dans ce mode de réalisation, le module de refroidissement est entièrement assemblé en une seule opération, y compris les boîtes collectrices d'entrée et de sortie délimitées par l'enveloppe elle-même. Le module est alors réalisé en un matériau unique, par exemple un alliage d'aluminium.

Dans un mode de réalisation avantageux, l'enveloppe comprend deux demi-carters. Ces deux demi-carters peuvent être aptes à coulisser l'un par rapport à l'autre pour s'ajuster à des variations de hauteur de l'un au moins des faisceaux d'échange de chaleur.

Lorsque les boîtes collectrices d'entrée et de sortie du refroidissement d'air de suralimentation sont rapportées, chacun des deux demi-carters présente avantageusement une section en forme de U comportant une paroi de fond et deux bords latéraux situés de part et d'autre de la paroi de fond, les bords latéraux de l'un des demi-carters coulissant par rapport aux bords latéraux de l'autre demi-carter. lorsque le module de refroidissement est réalisé entièrement en aluminium, chacun des deux demi-carters présente avantageusement une forme de récipient comportant un rebord périphérique, le rebord périphérique d'un demi-carter étant apte à s'emboîter dans le rebord périphérique de l'autre demi-carter et à coulisser par rapport à celui-ci.

Quel que soit le mode de réalisation, l'enveloppe peut comporter, dans une réalisation particulière, un logement embouti qui reçoit le faisceau d'échange de chaleur du refroidisseur des gaz d'échappement-recirculés.

Dans une autre réalisation, l'enveloppe comprend un carter de refroidisseur d'air de suralimentation séparé, ce carter séparé étant brasé en une seule opération à l'un des deux demi-carters durant l'opération de brasage unique durant laquelle les faisceaux sont assemblés l'un à l'autre.

L'un des demi-carters peut comporter avantageusement une paroi de fond présentant une plus grande hauteur afin de faciliter l'implantation du refroidisseur des gaz d'échappement recirculés.

Enfin, conformément à une autre caractéristique avantageuse de l'invention, le module de refroidissement comporte un passage pour les gaz d'échappement recirculés qui débouche directement dans la boîte collectrice de sortie du refroidisseur d'air de suralimentation, la section de ce passage étant égale ou supérieure à la section du faisceau du refroidisseur des gaz d'échappement recirculés.

Grâce à cette caractéristique, le mélange de l'air d'admission et des gaz recirculés s'effectue bien en amont des tubulures d'admission. Les gaz peuvent se mélanger et par conséquent leur température s'homogénéiser, de telle sorte que la température du mélange est abaissée.

En outre, le fait que la section de passage des gaz d'échappement recirculés peut être au moins égale à la section du faisceau du refroidisseur des gaz d'échappement recirculés permet à ces derniers de ne pas subir de pertes de charge et améliore l'homogénéité du mélange.

D'autres caractéristiques et avantages de l'invention apparaîtront encore à la lecture de la description qui suit d'exemples de réalisation donnés à titre illustratif en référence aux figures annexées. Sur ces figures :
- la figure 1 est une vue extérieure en perspective d'un premier mode de réalisation d'un module de refroidissement conforme à l'invention ;
- la figure 2 est une vue éclatée, sans les boîtes collectrices, du module représenté sur la figure 1 ;
- la figure 3 est une vue transversale en coupe du module des figures 1 et 2 à travers un plan passant par le centre de la bride d'entrée des gaz d'échappement ;
- la figure 4 est une vue en coupe longitudinale du module de refroidissement par un plan passant par l'axe d'une des tubulures d'eau de refroidissement ;
- la figure 5 est une vue de détail en coupe qui illustre la structure du faisceau d'échange de chaleur du refroidisseur d'air de suralimentation ;
- la figure 6 est une vue extérieure en perspective d'une variante de réalisation du module de la figure 1 ;
- la figure 7 est une vue en perspective, boîte collectrice ôtée, du module de la figure 6 ;
- la figure 8 est une vue en perspective éclatée du module des figures 6 et 7 ;
- la figure 9 est une vue extérieure en perspective d'un seconde mode de réalisation d'un module de refroidissement selon l'invention comportant des boîtes collectrices rapportées ;
- la figure 10 est une vue en perspective de dessous du module de la figure 9 ;
- la figure 11 est une vue en perspective, boîte collectrice ôtée, du module des figures 9 et 10 ;
- la figure 12 est une vue en coupe longitudinale du module de la figure 9 selon un plan passant par l'axe de l'une des tubulures d'eau de refroidissement ;
- la figure 13 est une vue en coupe transversale selon un plan passant par l'axe de la bride d'entrée des gaz d'échappement recirculés ;
- la figure 14 est une vue en perspective extérieure d'un module de refroidissement conforme à l'invention, réalisé entièrement en aluminium ;
- la figure 15 est une vue de dessus du module de refroidissement de la figure 14 ;
- la figure 16 est une vue en coupe selon la ligne XVI-XVI de la figure 15 ;
- la figure 17 est une vue en coupe selon la ligne XVII-XVII de la figure 15 ; et
- la figure 18 est une vue en coupe selon la ligne XVIII-XVIII de la figure 15.

Le module de refroidissement de l'invention est destiné à équiper un véhicule automobile à moteur à combustion interne comprenant deux circuits de refroidissement, un premier circuit à haute température pour le refroidissement du moteur à combustion et un deuxième circuit à basse température pour le refroidissement de certains équipements du véhicule. Ce module est constitué d'un refroidisseur d'air de suralimentation et d'un refroidisseur des gaz d'échappement recirculés. Chacun de ces refroidisseurs est lui-même constitué d'un faisceau d'échange de chaleur, d'une boîte collectrice d'entrée accolée à une extrémité d'entrée du faisceau d'échange de chaleur et d'une boîte collectrice de sortie accolée à une extrémité de sortie du faisceau d'échange de chaleur. Le gaz à refroidir, à savoir l'air d'alimentation ou de suralimentation ou les gaz d'échappement recirculés, est introduit dans la boîte collectrice d'entrée du refroidisseur. Il traverse le faisceau d'échange de chaleur en cédant de la chaleur à un fluide de refroidissement, généralement l'eau du circuit à basse température, puis débouche dans la boîte collectrice de sortie.

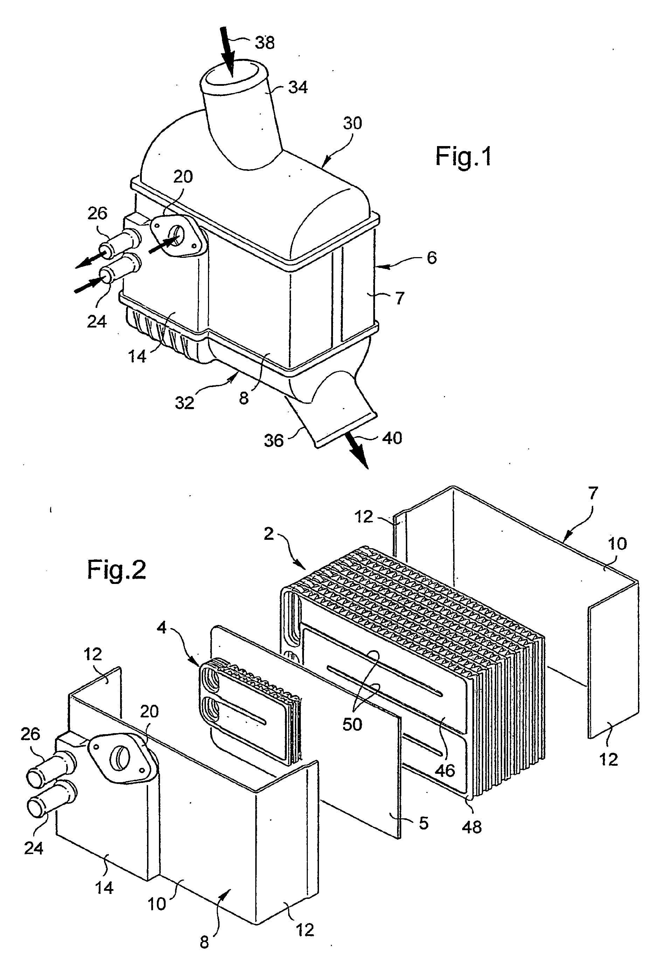

Dans l'exemple représenté.sur les figures 1 à 5, le faisceau du refroidisseur d'air de suralimentation est désigné par la référence générale 2 et le faisceau du refroidisseur des gaz d'échappement recirculés par la référence générale 4. Les faisceaux 2 et 4 sont séparés l'un de l'autre par une plaque d'interface 5 (figure 2).

Afin de réduire l'encombrement du module, comme on l'a exposé précédemment, les faisceaux 2 et 4 sont logés à l'intérieur d'une enveloppe commune 6. Dans le mode de réalisation des figures 1 à 5, l'enveloppe 6 est constituée de deux demi-carters, à savoir un premier demi-carter 7 et un second demi-carter 8. Chaque demi-carter 7, 8 présente une section en forme de U très allongée comportant une paroi de fond 10 et deux bords latéraux 12 situés de part et d'autre de la paroi de fond 10. Les bords latéraux 10 des demi-carters 7 et 8 sont aptes à coulisser l'un avec l'autre de manière à permettre d'ajuster la hauteur de l'enveloppe 6 aux variations dimensionnelles des faisceaux d'échange de chaleur 2 et 4. En effet, par suite des tolérances de fabrication, la hauteur de ces faisceaux peut varier légèrement.

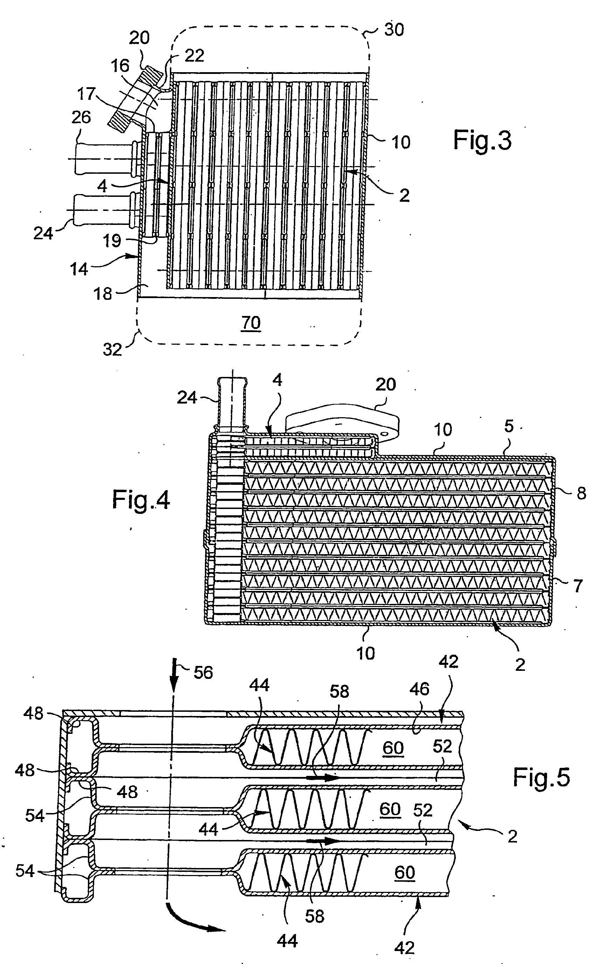

L'un des deux demi-carters, le demi-carter 8 en l'occurrence, comporte un logement 14, réalisé par exemple par emboutissage et destiné à loger le faisceau 4 du refroidisseur des gaz d'échappement recirculés. Comme on peut le voir plus particulièrement sur la figure 4, dans l'une de ses dimensions, orientée selon la plus grande dimension du faisceau d'échange de chaleur 4, le logement 14 est dimensionné de manière à s'ajuster à la longueur du faisceau 4. En revanche, comme on peut le voir plus particulièrement sur la figure 3, selon son autre dimension, orientée selon la largeur du faisceau d'échange de chaleur 4, le logement 14 est dimensionné de manière à ménager un espace libre 16 du côté de l'extrémité d'entrée 17 du faisceau 4 et un espace libre 18 du côté de l'extrémité de sortie 19 de ce même faisceau. Les espaces libres 16 et 18 constituent ainsi, respectivement, une boîte collectrice d'entrée 16 et une boîte collectrice de sortie 18 du refroidisseur des gaz d'échappement recirculés.

Une bride d'entrée 20 est raccordée à une tubulure d'entrée 22 qui débouche dans la boîte collectrice d'entrée 16 (figure 3). La bride 20 permet de raccorder une canalisation d'amenée (non représentée) des gaz d'échappement à refroidir. Une tubulure d'entrée 24 et une tubulure de sortie 26 sont en outre prévues sur le logement 14 du demi-carter 8. Les tubulures 24 et 26 permettent respectivement l'entrée et la sortie d'un fluide de refroidissement, généralement l'eau du circuit à basse température dans le faisceau 4 du refroidisseur des gaz d'échappement recirculés et le faisceau 2 du refroidisseur d'air de suralimentation. Dans le module représenté, les canaux de circulation du fluide de refroidissement dans les faisceaux 2 et 4 sont raccordés en parallèle. En d'autres termes, les tubulures 24 et 26 sont communes aux deux faisceaux, ce qui diminue le nombre des raccordements extérieurs à effectuer.

Le module de refroidissement représenté sur les figures 1 à 5 comporte en outre une boîte collectrice d'entrée 30 et une boîte collectrice de sortie 32 pour l'air de suralimentation. Contrairement aux boîtes collectrices 16 et 18 du refroidisseur des gaz d'échappement recirculés, les boîtes collectrices d'entrée 30 et de sortie 32 du refroidisseur d'air de suralimentation ne sont pas délimitées directement par l'enveloppe 6, mais rapportées. Cela permet de les réaliser en un matériau différent de celui de l'enveloppe 6 et des faisceaux d'échange de chaleur 2 et 4, par exemple en matière plastique. La boîte collectrice d'entrée comporte une tubulure d'entrée 34 et la boîte collectrice de sortie une tubulure de sortie 36. L'air de suralimentation pénètre dans la boîte collectrice d'entrée par la tubulure 34, comme schématisé par la flèche 38, traverse le faisceau d'échange de chaleur 2, puis débouche sur la boîte collectrice de sortie 32 avant de quitter le module d'échange de chaleur dans la tubulure de sortie 36, comme schématisé par la flèche 40.

Afin de permettre la fixation des boîtes collectrices d'entrée et de sortie du refroidisseur d'air de suralimentation sur l'enveloppe 6, chacun des deux demi-carters 7 et 8 comporte un premier et un second rebord périphériques qui débordent de part et d'autre du faisceau 4 du refroidisseur d'air de suralimentation. Avantageusement, des gorges (non représentées) sont formées dans les pieds des boîtes collectrices 30 et 32. Ces gorges s'engagent dans les rebords périphériques des demi-carters 7 et 8. Les boîtes collectrices peuvent être fixées sur l'enveloppe par tous moyens appropriés, par exemple par collage.

Comme on peut le voir plus particulièrement sur la figure 5, qui représente une vue de détail en coupe du faisceau d'échange de chaleur 2 du refroidisseur d'air de suralimentation, chacun des faisceaux d'échange de chaleur 2 et 4 est constitué par un empilement de plaques 42 entre lesquelles sont disposés des intercalaires ondulés 44 constituant des surfaces d'échange thermique qui améliorent l'échange de chaleur entre l'air de suralimentation à refroidir et les plaques. Chaque plaque présente une forme sensiblement rectangulaire comportant deux petits côtés et deux grands côtés. Chaque plaque comporte une paroi de fond 46 limitée par un rebord périphérique 48. Des nervures 50 peuvent être prévues dans la paroi de fond 46 de chacune des plaques afin de délimiter des passes de circulation pour le fluide de refroidissement (figure 2).

La paroi de fond 46 et le rebord périphérique 48 déterminent une cuvette peu profonde. Les plaques sont groupées par paires assemblées par leur rebord périphérique 48. De la sorte, la cuvette de la plaque supérieure et la cuvette de la plaque inférieure appartenant à une même paire de plaques s'ajoutent pour constituer un canal de circulation 52 du fluide de refroidissement. Par ailleurs, deux bossages 54 sont formés les longs d'un petit côté de chacune des plaques. Les bossages d'une paire de plaque sont en appui sur les bossages des paires de plaques adjacentes. On réalise ainsi un collecteur d'entrée et un collecteur de sortie pour le fluide de refroidissement. Le fluide de refroidissement pénètre dans le faisceau comme schématisé par la flèche 56 puis circule dans les canaux de circulation 52 comme schématisé par les flèches 58. La sortie du fluide hors du faisceau d'échange de chaleur 2 s'effectue en sens inverse.

Les bossages 54 de deux paires de plaques déterminent également entre eux des canaux de circulation 60 pour l'air de suralimentation du refroidisseur d'air de suralimentation et le gaz d'échappement du refroidisseur des gaz d'échappement. Les générateurs de turbulence 44 sont disposés dans les passages de circulation 60.

En ce qui concerne plus particulièrement le faisceau 4 du refroidisseur des gaz d'échappement recirculés, chaque canal de circulation des gaz d'échappement à refroidir peut avantageusement être compris entre deux canaux de circulation du liquide de refroidissement. Grâce à cette caractéristique, la paroi du logement embouti 14 et la plaque d'interface 5 ne sont pas en contact direct avec les gaz à refroidir dont la température peut être très élevée (500°C). Au contraire, ces parois sont refroidies par la circulation du liquide de refroidissement. Leur température est ainsi considérablement abaissée par rapport à la température des parois d'un refroidisseur des gaz d'échappement recirculés classique. Elle peut être par exemple de l'ordre de 200°C. Ces parois peuvent donc être réalisées dans un matériau qui résiste moins à la température, comme l'aluminium. Cet avantage est appréciable parce que l'aluminium est plus facile à travailler et revient moins cher que l'acier inoxydable.

Comme on peut le voir plus particulièrement sur la figure 3, l'espace libre 18 ménagé dans le logement 14, qui constitue la boîte collectrice de sortie du refroidisseur des gaz d'échappement recirculés est en communication directe avec l'espace intérieur 70 de la boîte collectrice de sortie 32 du refroidisseur d'air de suralimentation. En conséquence, la section du passage offerte aux gaz d'échappement recirculés refroidis est la section de la boîte collectrice de sortie 18. Cette section est égale à la section du faisceau 4 du refroidisseur des gaz d'échappement. Ces derniers peuvent par conséquent parvenir dans la boîte collectrice de sortie 32 du refroidisseur d'air de suralimentation sans être freinés dans leur écoulement. En particulier, ils ne doivent franchir aucun passage de section rétrécie qui provoquerait une perte de charge.

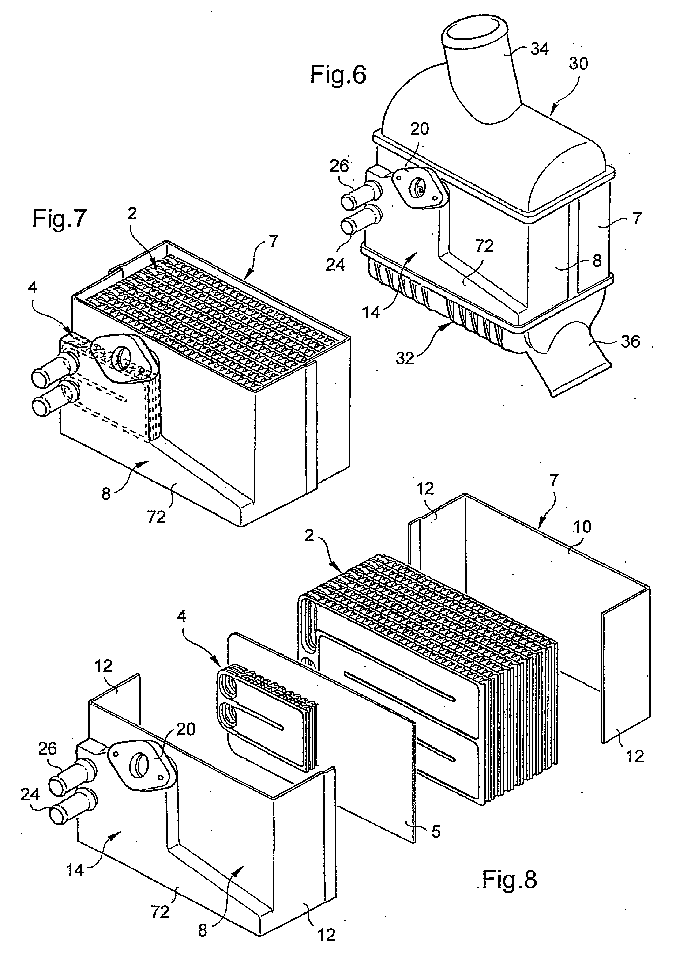

On a représenté sur les figures 6 à 8 une variante de réalisation du module de refroidissement des figures 1 à 5. La constitution générale du refroidisseur des figures 6 à 8 est identique à celle du premier mode de réalisation. En conséquence, les mêmes éléments ont été désignés par les mêmes numéros de référence. La différence réside dans le fait que le logement 14 embouti dans le demi-carter 8, au lieu de présenter une largeur égale à la plus grande dimension des plaques du faisceau d'échange de chaleur 4 du radiateur des gaz d'échappement recirculés, comporte une partie 72 de section agrandie. Dans l'exemple, la section agrandie 72 s'étend sur toute la longueur du module de refroidissement. En d'autre terme, sa longueur est égale à la longueur des plaques du faisceau d'échange de chaleur 2 du refroidisseur d'air de suralimentation, cette dernière correspondant également à la longueur de la boîte collectrice de sortie 32 de ce refroidisseur.

En conséquence, dans ce mode de réalisation, la section de passage offerte aux gaz d'échappement recirculés après leur passage dans le faisceau 4 du refroidisseur n'est pas égale, mais supérieure, à la section du faisceau d'échange de chaleur 4. Cette caractéristique permet un meilleur mélange des gaz d'échappement recirculés et des gaz frais de la boîte collectrice de sortie 32. En effet, dès leur sortie du faisceau d'échange de chaleur 4, les gaz d'échappement recirculés peuvent se répartir sur toute la longueur du module de refroidissement. Par conséquent, le mélange s'effectue avec la totalité de l'air de suralimentation, et non préférentiellement avec l'air de suralimentation situé du même côté que le refroidisseur des gaz d'échappement.

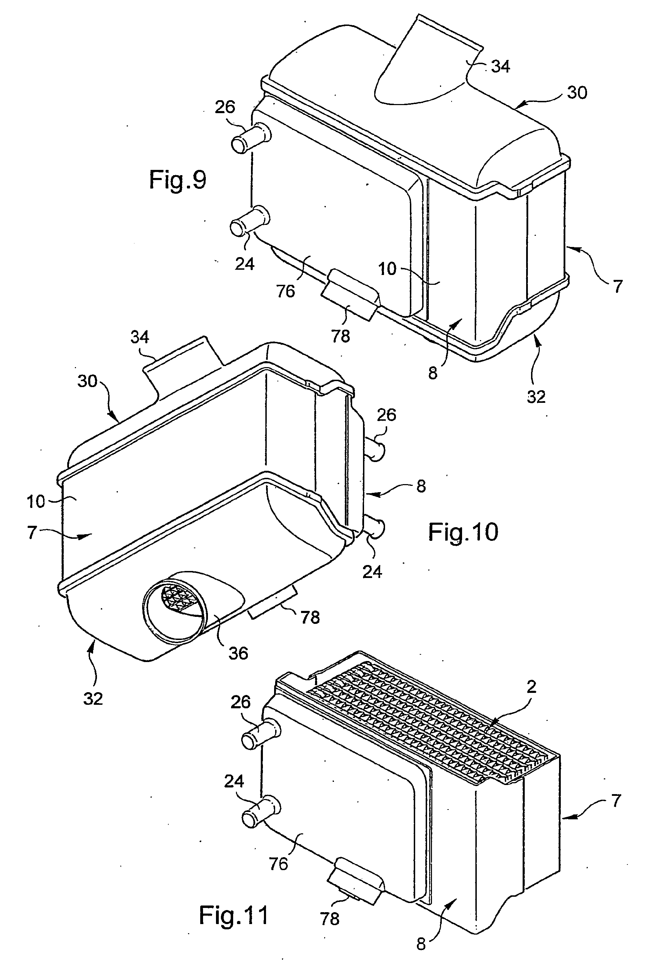

On a représenté sur les figures 9 à 13 une troisième variante de réalisation du module de refroidissement de l'invention. Sur ces figures, les mêmes éléments portent les mêmes numéros de références que sur les figures précédentes. Le module des figures 9 à 13 se distingue par la présence d'un carter séparé pour le faisceau 4 du refroidisseur des gaz d'échappement recirculés. Alors que, dans les deux modes de réalisation précédents, le faisceau 4 du refroidisseur des gaz d'échappement est logé dans un logement 14 embouti directement dans le demi-carter 8, dans le présent mode de réalisation, le faisceau 4 est logé dans un carter 76 conçu comme une pièce séparée et rapporté sur le demi carter 8. La fixation du carter 76 sur le demi-carter 8 peut s'effectuer par tout moyen à la portée de l'homme de l'art. Toutefois, le carter 76 est de préférence assemblé par brasage en une seule opération. En d'autres termes, on met à profit l'opération unique de brasage durant laquelle les faisceaux 2 et 4 des refroidisseurs sont assemblés et durant laquelle ces faisceaux sont assemblés l'un à l'autre et à l'enveloppe 6 (constituée par les deux demi-carters 7 et 8 dans les exemples) pour assembler le carter séparé 76 au demi-carter 8. Ainsi, la présence de cette pièce supplémentaire n'impose pas d'opération supplémentaire pour l'assemblage du module de refroidissement, à l'exception du fait de mettre en place le carter 76 sur le demi-carter 8. La tubulure d'entrée 24 et la tubulure de sortie 26 du fluide de refroidissement sont prévues sur le carter séparé, de même que la tubulure 78 d'entrée des gaz d'échappement recirculés.

Le carter rapporté 76 peut être réalisé dans le même matériau que l'enveloppe 6 ou dans un matériau différent. Toutefois, si le carter 76 doit être assemblé par brasage en une seule opération, il est préférable que les matériaux soient les mêmes.

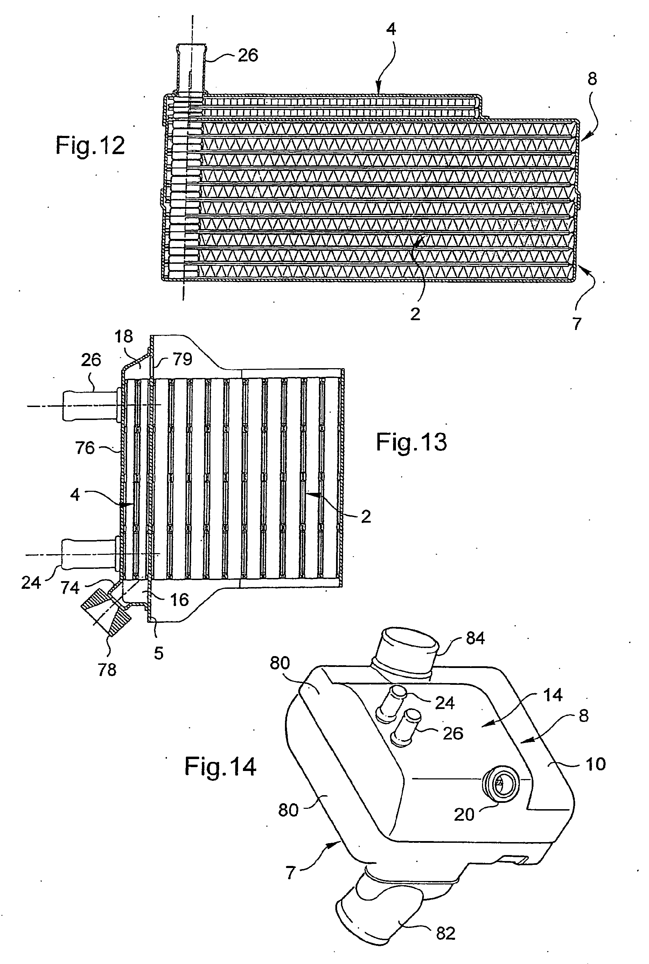

De la même manière que pour le logement embouti 14, le carter séparé 76 présente une grande dimension (sa longueur) qui correspond à la longueur des plaques du faisceau d'échange de chaleur 4 du refroidisseur des gaz d'échappement. En revanche, sa petite dimension (sa largeur) est supérieure à la petite dimension des plaques du faisceau 4 de manière à délimiter un espace libre 16 à une extrémité d'entrée du faisceau 4 et un espace libre 18 à une extrémité de sortie de ce même faisceau. Les espaces libres 16 et 18 constituent, comme précédemment, respectivement une boîte collectrice d'entrée et une boîte collectrice de sortie pour les gaz d'échappement recirculés. Une plaque d'interface 5 sépare le faisceau 2 du refroidisseur d'air de suralimentation du faisceau 4 du refroidisseur des gaz d'échappement. La plaque d'interface ferme les boîtes collectrices d'entrée et de sortie 16 et 18. Une ou plusieurs perforations 79, formant passage de communication, sont formées dans la plaque d'interface 5 afin de mettre en communication la boîte collectrice de sortie 18 avec le volume interne de la boîte collectrice de sortie 32 du refroidisseur d'air de suralimentation (voir figure 13).

Le mode de réalisation des figures 9 à 13 se distingue en outre par le fait que l'un des deux demi-carters, en l'occurrence le demi-carter 8, comporte une paroi de fond 10 dont la largeur est supérieure à celle de la paroi de fond de l'autre demi-carter, le demi-carter 7 dans l'exemple. Cette disposition est avantageuse parce qu'elle offre davantage d'espace pour l'implantation du refroidisseur des gaz d'échappement recirculés. En particulier, lorsque le module de refroidissement comporte un carter séparé rapporté 76, il est nécessaire de prévoir à la périphérie de ce carter une zone libre permettant le brasage des surfaces en contact du carter 76 et de la paroi de fond 10. Le fait d'augmenter la largeur de la paroi de fond permet également de dimensionner plus généreusement les boîtes collectrices d'entrée 16 et 18.

On remarque que, dans ce mode de réalisation, le passage 79 qui met en communication la boîte collectrice de sortie 18 du refroidisseur des gaz d'échappement avec le volume interne de la boîte de sortie 32 du radiateur d'air de suralimentation présente une section de passage sensiblement égale à la section du faisceau 4. Il va de soi, que selon une variante de réalisation, cette section de passage pourrait être agrandie de manière à s'étendre sur toute la longueur des plaques du faisceau 2 du refroidisseur d'air de suralimentation, comme cela a été décrit en référence aux figures 6 à 8. Il suffirait pour cela de modifier la forme du carter rapporté 76 en le munissant d'une extension 72 semblable à l'extension du logement embouti 14 des figures 6 à 8. -

On a représenté sur les figures 14 à 18 une quatrième variante de réalisation du module de refroidissement de l'invention. Ce mode de réalisation se caractérise par le fait qu'il ne comporte pas de boîte collectrice d'entrée et de sortie 30, 32 rapportées pour le refroidisseur d'air de suralimentation. En effet, ces boîtes collectrices sont constituées directement par des espaces libres disposés de part et d'autre du faisceau d'échange de chaleur 2 du radiateur d'air de suralimentation.

Chaque demi-carter 7, 8 possède une paroi de fond 10 généralement plane et de forme carrée ou rectangulaire et quatre parois latérales 80 raccordées à la paroi de fond 10 par un arrondi et sensiblement perpendiculaires à cette dernière. Les parois latérales 80 des deux demi-carters s'adaptent l'une sur l'autre de manière à permettre aux deux demi-carters de coulisser l'un par rapport à l'autre pour s'ajuster à de légères variations de hauteur des faisceaux 2 et 4. Une tubulure 82 d'entrée de l'air de suralimentation est prévue sur le demi-carter 7 et une tubulure de sortie 84 de l'air de suralimentation sur le demi-carter 8.

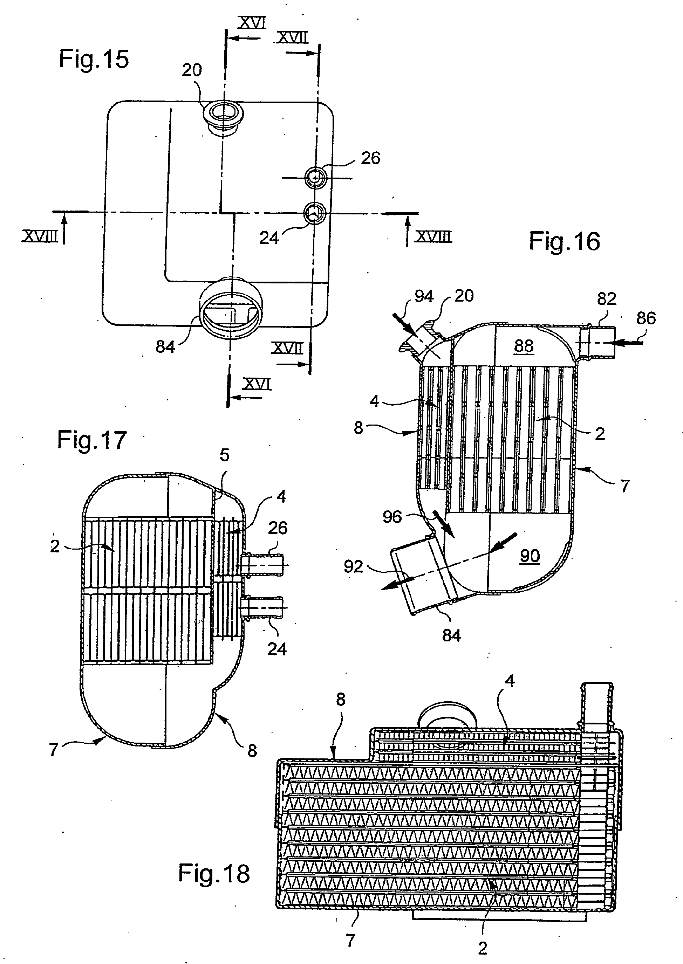

Comme on peut le voir en particulier sur la figure 16, l'air de suralimentation pénètre dans le module de refroidissement par la tubulure d'entrée 82, comme schématisé par la flèche 86. Il parvient dans la boîte collectrice d'entrée 88 puis traverse le faisceau d'échange de chaleur 2 du refroidisseur d'air de suralimentation en échangeant de la chaleur avec l'eau de refroidissement. Après avoir traversé le faisceau 2, l'air de suralimentation refroidi parvient dans la boîte collectrice de sortie 90 puis quitte le module de refroidissement par la tubulure 84, comme schématisé par la flèche 92. Les gaz d'échappement recirculés pénètrent dans le module de refroidissement par la bride 20, comme schématisé par la flèche 94 ; ils traversent de part en part le faisceau d'échange de chaleur 4 et débouchent directement, comme schématisé par la flèche 96 dans la boîte collectrice de sortie 90 du refroidisseur d'air de suralimentation. Avantageusement, la section de passage qui met en communication le refroidisseur des gaz d'échappement avec la boîte collectrice 90 est égale ou supérieure à la section de passage du faisceau 4.

Les tubulures d'entrée et de sortie 82 et 84 peuvent être réalisées en aluminium et brasées aux demi-carters 7 et 8 durant l'opération de brasage unique du module de refroidissement. Ou bien, comme la tubulure 82 dans l'exemple, elles peuvent être réalisées en un autre matériau, par exemple en matière plastique et montées postérieurement à l'opération de brasage. Le mode de réalisation des figures 14 à 18 peut donc être réalisé en un seul matériau, par exemple l'aluminium, ce qui permet de l'assembler entièrement en une seule opération de brasage, sans même avoir à rapporter les boîtes collectrices d'entrée et de sortie du refroidisseur d'air de suralimentation, comme dans les exemples précédents.

L'un des deux demi-carters, le demi-carter 8 dans l'exemple, comporte un logement embouti 14 destiné à recevoir le faisceau d'échange de chaleur 4 du refroidisseur des gaz d'échappement. Comme on l'a déjà décrit précédemment, l'une des dimensions du logement embouti 14 s'adapte à la longueur des plaques du faisceau 4, tandis que l'autre dimension permet de ménager, respectivement à une extrémité d'entrée et une extrémité de sortie du faisceau 4 des boîtes collectrices d'entrée 16 et de sortie 18 pour les gaz d'échappement recirculés. Il va de soi que, dans une variante de réalisation, le logement embouti 14 pourrait être remplacé par un carter séparé rapporté identique au carter 76 décrit précédemment.

## Revendications

1. Module de refroidissement, constitué d'un refroidisseur d'air de suralimentation et d'un refroidisseur des gaz d'échappement recirculés, le refroidisseur d'air de suralimentation comprenant un faisceau d'échange de chaleur (2) pour lé refroidissement de l'air de suralimentation et le refroidisseur des gaz d'échappement recirculés comprenant un faisceau d'échange de chaleur (4) pour le refroidissement des gaz d'échappement recirculés **caractérisé en ce que** le faisceau d'échange de chaleur (2) du refroidisseur d'air de suralimentation et le faisceau d'échange de chaleur (4) du refroidisseur des gaz d'échappement recirculés sont assemblés en une seule opération de brasage et sont également assemblés l'un à l'autre durant cette même opération de brasage, **en ce que** ledit module comprend en outre une enveloppe (6) logeant les faisceaux (2,4) du refroidisseur d'air de suralimentation et du refroidisseur des gaz d'échappement recirculés, et **en ce que** ladite enveloppe (6) est assemblée à ces faisceaux durant l'opération de brasage unique durant laquelle ces faisceaux sont assemblés l'un à l'autre.

2. Module de refroidissement selon la revendication 1, **caractérisé en ce que** le refroidisseur d'air de suralimentation comprend en outre une boîte collectrice d'entrée (30) de l'air à refroidir accolée à une extrémité d'entrée du faisceau d'échange de chaleur (2) du refroidisseur d'air de suralimentation et une boîte collectrice de sortie (32) de l'air refroidi accolée à une extrémité de sortie du faisceau d'échange de chaleur (2) du refroidisseur d'air de suralimentation, et, **en ce que** l'enveloppe (6) comporte un premier et un second rebord périphérique qui débordent de part et d'autre du faisceau (2) du refroidisseur d'air de suralimentation, la boîte collectrice d'entrée du refroidisseur d'air de suralimentation étant assemblée à l'un de ces rebords, la boîte collectrice de sortie (32) du refroidisseur d'air de suralimentation étant assemblée à l'autre de ces rebords périphériques.

3. Module de refroidissement selon la revendication 2, **caractérisé en ce que** les dimensions de l'enveloppe (6) sont choisies de manière qu'elles délimitent un premier et un second espaces libres (88,90) respectivement à une extrémité d'entrée et à une extrémité de sortie du faisceau d'échange de chaleur (2) du refroidisseur d'air de suralimentation, le premier et le second espaces libres constituant respectivement une boîte collectrice d'entrée et une boîte collectrice de sortie de l'air de suralimentation.

4. Module de refroidissement selon l'une des revendications précédentes, **caractérisé en ce que** l'enveloppe (6) comprend deux demi-carters (7,8).

5. Module de refroidissement selon la revendication 4, **caractérisé en ce que** les deux demi-carters (7,8) sont aptes à coulisser l'un par rapport à l'autre pour s'ajuster à des variations de hauteur de l'un au moins des faisceaux d'échange de chaleur (2,4).

6. Module de refroidissement selon l'une des revendications 4 et 5, **caractérisé en ce que** chacun des deux demi-carters (7,8) présente une section en forme de U comportant une paroi de fond (10) et deux bords latéraux (12) situés de part et d'autre de la paroi de fond (10), les bords latéraux (12) de l'un des demi-carters coulissant par rapport aux bords latéraux de l'autre demi-carter.

7. Module de refroidissement selon l'une des revendications 4 et 5, **caractérisé en ce que** chacun des deux demi-carters (7,8) présente une forme de récipient comportant un rebord périphérique, le rebord périphérique d'un demi-carter étant apte à s'emboîter dans le rebord périphérique de l'autre demi-carter et à coulisser par rapport à celui-ci.

8. Module de refroidissement selon l'une des revendications 1 à 7, **caractérisé en ce que** l'enveloppe (6) comporte un logement embouti (14) qui reçoit le faisceau (4) du refroidisseur des gaz d'échappement recirculés.

9. Module de refroidissement selon l'une des revendications 1 à 8, **caractérisé en ce que** l'enveloppe (6) comprend un carter de refroidisseur des gaz d'échappement recirculés (76) séparé, ce carter séparé (76) étant brasé en une seule opération à l'un des deux demi-carters (7,8) durant l'opération de brasage unique durant laquelle les faisceaux (2,4) sont assemblés l'un à l'autre.

10. Module de refroidissement selon l'une des revendications 8 et 9, **caractérisé en ce que** le refroidisseur des gaz d'échappement recirculés, comprend une boîte collectrice d'entrée (16) des gaz d'échappement recirculés accolée à une extrémité d'entrée du faisceau d'échange de chaleur (4) du refroidisseur des gaz d'échappement recirculés et une boîte collectrice de sortie (18) des gaz d'échappement recirculés accolée à une extrémité de sortie du faisceau d'échange de chaleur (4) du refroidisseur des gaz d'échappement recirculés, le logement (14) ou le carter séparé (76) du faisceau (4) du refroidisseur des gaz d'échappement recirculés délimitant un premier et un second espaces libres (16,18) respectivement à une extrémité d'entrée et à une extrémité de sortie du faisceau d'échange de chaleur du refroidisseur des gaz d'échappement recirculés, le premier et le second espaces libres constituant respectivement la boîte collectrice d'entrée (16) et la boite collectrice de sortie (18) des gaz d'échappement recirculés.

11. Module de refroidissement selon l'une des revendications 4 à 10, **caractérisé en ce que** l'un au moins des deux demi-carters comporte une paroi de fond présentant une plus grande hauteur afin de faciliter l'implantation du refroidisseur des gaz d'échappement recirculés.

12. Module de refroidissement selon l'une des revendications 4 à 11, **caractérisé en ce qu'**il comporte un passage (18,72, 79) pour les gaz d'échappement recirculés qui débouchent directement dans la boîte collectrice de sortie (32) du refroidisseur d'air de suralimentation, la section de ce passage étant égale ou supérieure à la section du faisceau (4) du refroidisseur des gaz d'échappement recirculés.

13. Module de refroidissement selon l'une des revendications précédentes dans lequel le faisceau d'échange de chaleur (2) du refroidisseur d'air de suralimentation et le faisceau d'échange de chaleur (4) du refroidisseur des gaz d'échappement recirculés sont en aluminium et/ou alliage d'aluminium.

14. Module de refroidissement selon la revendication 13 dans lequel l'enveloppe (6) est également en aluminium et/ou alliage d'aluminium.

15. Module de refroidissement selon la revendication 14 dans lequel les boîtes collectrices (16,18, 30,32,) desdits refroidisseurs sont également en aluminium et/ou alliage d'aluminium.

## Claims

1. Cooling module consisting of an intercooler and of an EGR cooler, the intercooler comprising a heat exchange bundle (2) for cooling the supercharging air and the EGR cooler comprising a heat exchange bundle (4) for cooling the recirculated exhaust gases, **characterized in that** the intercooler heat exchange bundle (2) and the EGR cooler heat exchange bundle (4) are assembled in a single brazing operation and are also assembled with one another during this same brazing operation, **in that** the said module further comprises a wrapper (6) housing the supercharger cooler and EGR cooler bundles (2, 4), and **in that** the said wrapper (6) is assembled with these bundles during the single brazing operation during which these bundles are assembled with one another.

2. Cooling module according to Claim 1, **characterized in that** the intercooler further comprises an inlet header box (30) for the air that is to be cooled attached to an inlet end of the intercooler heat exchange bundle (2) and an outlet header box (32) for the cooled air attached to an outlet end of the intercooler heat exchange bundle (2), and **in that** the wrapper (6) comprises a first and a second peripheral rim which protrude beyond the intercooler bundle (2) on each side, the inlet header box of the intercooler being assembled with one of these rims, the outlet header box (32) of the intercooler being assembled with the other of these peripheral rims.

3. Cooling module according to Claim 2, **characterized in that** the dimensions of the wrapper (6) are chosen such that they delimit a first and a second empty space (88, 90) at an inlet end and at an outlet end, respectively, of the intercooler heat exchange bundle (2), the first and the second empty spaces respectively constituting an inlet header box and an outlet header box for the supercharging air.

4. Cooling module according to one of the preceding claims, **characterized in that** the wrapper (6) comprises two half-casings (7, 8).

5. Cooling module according to Claim 4, **characterized in that** the two half-casings (7, 8) are capable of sliding one relative to the other in order to adapt to variations in height of at least one of the heat exchange bundles (2, 4).

6. Cooling module according to one of Claims 4 and 5, **characterized in that** each of the two half-casings (7, 8) has a U-shaped cross section comprising a bottom wall (10) and two lateral edges (12) situated one on each side of the bottom wall (10), the lateral edges (12) of one of the half-casings sliding relative to the lateral edges of the other half-casing.

7. Cooling module according to one of Claims 4 and 5, **characterized in that** each of the two half-casings (7, 8) is in the shape of a container comprising a peripheral rim, the peripheral rim of one half-casing being able to nest in the peripheral rim of the other half-casing and to slide relative thereto.

8. Cooling module according to one of Claims 1 to 7, **characterized in that** the wrapper (6) comprises a pressed housing (14) which accommodates the EGR cooler bundle (4).

9. Cooling module according to one of Claims 1 to 8, **characterized in that** the wrapper (6) comprises a separate EGR cooler casing (76), this separate casing (76) being brazed in a single operation to one of the two half-casings (7, 8) during the single brazing operation during which the bundles (2, 4) are assembled with one another.

10. Cooling module according to one of Claims 8 and 9, **characterized in that** the EGR cooler comprises an inlet header box (16) for the recirculated exhaust gases, attached to an inlet end of the EGR cooler heat exchange bundle (4) and an outlet header box (18) for the recirculated exhaust gases, attached to an outlet end of the EGR cooler heat exchange bundle (4), the housing (14) or the separate casing (76) of the EGR cooler bundle (4) delimiting a first and a second empty space (16, 18) respectively at an inlet end and at an outlet end of the EGR cooler heat exchange bundle, the first and second empty spaces respectively constituting the inlet header box (16) and the outlet header box (18) for the recirculated exhaust gases.

11. Cooling module according to one of Claims 4 to 10, **characterized in that** at least one of the two half-casings comprises a bottom wall which is taller so as to make it easier to fit the EGR cooler.

12. Cooling module according to one of Claims 4 to 11, **characterized in that** it comprises a passage (18, 72, 79) for the recirculated exhaust gases which open directly into the outlet header box (32) of the intercooler, the cross section of this passage being greater than or equal to the cross section of the EGR cooler bundle (4).

13. Cooling module according to one of the preceding claims, in which the intercooler heat exchange bundle (2) and the EGR cooler heat exchange bundle (4) are made of aluminium and/or of aluminium alloy.

14. Cooling module according to Claim 13, in which the wrapper (6) is also made of aluminium and/or of aluminium alloy.

15. Cooling module according to Claim 14, in which the header boxes (16,18, 30,32) of the said coolers are also made of aluminium and/or aluminium alloy.

## Patentansprüche

1. Kühlmodul, das aus einem Aufladeluftkühler und einem Kühler für die rezirkulierten Auspuffgase gebildet ist, wobei der Aufladeluftkühler ein Wärmeaustauschbündel (2) zum Kühlen der Aufladeluft umfasst und der Kühler für die rezirkulierten Auspuffgase ein Wärmeaustauschbündel (4) zum Kühlen der rezirkulierten Auspuffgase umfasst, **dadurch gekennzeichnet, dass** das Wärmeaustauschbündel (2) des Aufladeluftkühlers und das Wärmeaustauschbündel (4) des Kühlers für die rezirkulierten Auspuffgase in einem einzigen Lötvorgang zusammengesetzt und auch miteinander während dieses selben Lötvorgangs verbunden werden, dass das Modul ferner eine Hülle (6) umfasst, die die Bündel (2, 4) des Aufladeluftkühlers und des Kühlers für die rezirkulierten Auspuffgase aufnimmt, und dass die Hülle (6) mit diesen Bündeln während des einzigen Lötvorgangs verbunden wird, während dessen diese Bündel miteinander verbunden werden.

2. Kühlmodul nach Anspruch 1, **dadurch gekennzeichnet, dass** der Aufladeluftkühler ferner einen Eingangskollektor (30) für die zu kühlende Luft, der an einem Eintrittsende des Wärmeaustauschbündels (2) des Aufladeluftkühlers angeordnet ist, und einen Ausgangskollektor (32) für die gekühlte Luft, der an einem Austrittsende des Wärmeaustauschbündels (2) des Aufladeluftkühlers angeordnet ist, umfasst, und dass die Hülle (6) einen ersten und einen zweiten Umfangsrand umfasst, die beiderseits das Bündel (2) des Aufladeluftkühlers überragen, wobei der Eingangskollektor des Aufladeluftkühlers mit einem dieser Ränder verbunden ist, wobei der Ausgangskollektor (32) des Aufladeluftkühlers mit dem anderen dieser Umfangsränder verbunden ist.

3. Kühlmodul nach Anspruch 2, **dadurch gekennzeichnet, dass** die Abmessungen der Hülle (6) derart gewählt werden, dass sie einen ersten und einen zweiten freien Raum (88, 90) an einem Eintrittsende bzw. einem Austrittsende des Wärmeaustauschbündels (2) des Aufladeluftkühlers begrenzen, wobei der erste und der zweite freie Raum jeweils einen Eingangskollektor bzw. einen Ausgangskollektor für die Aufladeluft bilden.

4. Kühlmodul nach einem der vorhergehenden Ansprüche, **dadurch gekennzeichnet, dass** die Hülle (6) zwei halbe Gehäuse (7, 8) umfasst.

5. Kühlmodul nach Anspruch 4, **dadurch gekennzeichnet, dass** die beiden halben Gehäuse (7, 8) zueinander gleiten können, um sich an Höhenvariationen mindestens eines der Wärmeaustauschbündel (2, 4) anzupassen.

6. Kühlmodul nach einem der Ansprüche 4 und 5, **dadurch gekennzeichnet, dass** jedes der beiden halben Gehäuse (7, 8) einen U-ftirmigen Querschnitt aufweist, umfassend eine Bodenwand (10) und zwei Seitenränder (12), die sich beiderseits der Bodenwand (10) befinden, wobei die Seitenränder (12) eines der halben Gehäuse in Bezug zu den Seitenrändern des anderen halben Gehäuses gleiten.

7. Kühlmodul nach einem der Ansprüche 4 und 5, **dadurch gekennzeichnet, dass** jedes der beiden halben Gehäuse (7, 8) eine Form eines Behälters aufweist, umfassend einen Umfangsrand, wobei der Umfangsrand eines halben Gehäuses in den Umfangsrand des anderen halben Gehäuses eingefügt werden und in Bezug zu diesem gleiten kann.

8. Kühlmodul nach einem der Ansprüche 1 bis 7, **dadurch gekennzeichnet, dass** die Hülle (6) eine umgestülpte Lagerung (14) umfasst, die das Bündel (4) des Kühlers für die rezirkulierten Auspuffgase aufnimmt.

9. Kühlmodul nach einem der Ansprüche 1 bis 8, **dadurch gekennzeichnet, dass** die Hülle (6) ein getrenntes Kühlgehäuse für die rezirkulierten Auspuffgase (76) umfasst, wobei dieses getrennte Gehäuse (76) in einem einzigen Vorgang an eines der beiden halben Gehäuse (7, 8) während des einzigen Lötvorgangs, während dessen die Bündel (2, 4) miteinander verbunden werden, gelötet wird.

10. Kühlmodul nach einem der Ansprüche 8 und 9, **dadurch gekennzeichnet, dass** der Kühler für die rezirkulierten Auspuffgase einen Eingangskollektor (16) für die rezirkulierten Auspuffgase, der an einem Eintrittsende des Wärmeaustauschbündels (4) des Kühlers für die rezirkulierten Auspuffgase angeordnet ist, und einen Ausgangskollektor (18) für die rezirkulierten Auspuffgase, der an einem Austrittsende des Wärmeaustauschbündels (4) des Kühlers für die rezirkulierten Auspuffgase angeordnet ist, umfasst, wobei die Lagerung (14) oder das getrennte Gehäuse (76) des Bündels (4) des Kühlers für die rezirkulierten Auspuffgase einen ersten und einen zweiten freien Raum (16, 18) an einem Eintrittsende bzw. einem Austrittsende des Wärmeaustauschbündels des Kühlers für die rezirkulierten Auspuffgase begrenzt, wobei der erste und der zweite freie Raum den Eingangskollektor (16) bzw. den Ausgangskollektor (18) der rezirkulierten Auspuffgase bilden.

11. Kühlmodul nach einem der Ansprüche 4 bis 10, **dadurch gekennzeichnet, dass** mindestens eines der beiden halben Gehäuse eine Bodenwand umfasst, die eine größere Höhe aufweist, um die Anbrixigung des Kühlers für die rezirkulierten Auspuffgase zu erleichtern.

12. Kühlmodul nach einem der Ansprüche 4 bis 11, **dadurch gekennzeichnet, dass** es einen Durchgang (18, 72, 79) für die rezirkulierten Auspuffgase umfasst, der direkt in den Ausgangskollektor (32) des Aufladeluftkühlers mündet, wobei der Querschnitt dieses Durchgangs größer oder gleich dem Querschnitt des Bündels (4) des Kühlers für die rezirkulierten Auspuffgase ist.

13. Kühlmodul nach einem der vorhergehenden Ansprüche, bei dem das Wärmeaustauschbündel (2) des Aufladeluftkühlers und das Wärmeaustauschbündel (4) des Kühlers für die rezirkulierten Auspuffgase aus Aluminium und/oder einer Aluminiumlegierung sind.

14. Kühlmodul nach Anspruch 13, bei dem die Hülle (6) ebenfalls aus Aluminium und/oder einer Aluminiumlegierung ist.

15. Kühlmodul nach Anspruch 14, bei dem die Kollektoren (16, 18, 30, 32) der Kühler ebenfalls aus Aluminium und/oder einer Aluminiumlegierung sind.
